Europäisches Patentamt

European Patent Office

Office européen des brevets

(11) Veröffentlichungsnummer : **0 401 323 B1**

(12) **EUROPÄISCHE PATENTSCHRIFT**

(45) Veröffentlichungstag der Patentschrift :
**15.04.92 Patentblatt 92/16**

(21) Anmeldenummer : **89912781.5**

(22) Anmeldetag : **13.11.89**

(86) Internationale Anmeldenummer :
**PCT/EP89/01356**

(87) Internationale Veröffentlichungsnummer :
**WO 90/07655 12.07.90 Gazette 90/16**

(51) Int. Cl.⁵ : **F16C 13/02,** F16C 13/00,
F16C 35/073, F16C 37/00,
// D21G1/02, B21B31/07

(54) **FÜHRUNGSLAGERUNG FÜR DEN MANTEL EINER DRUCKWALZE.**

(30) Priorität : **23.12.88 CH 4770/88**

(43) Veröffentlichungstag der Anmeldung :
**12.12.90 Patentblatt 90/50**

(45) Bekanntmachung des Hinweises auf die
Patenterteilung :
**15.04.92 Patentblatt 92/16**

(84) Benannte Vertragsstaaten :
**AT DE FR GB IT SE**

(56) Entgegenhaltungen :
**EP-A- 0 236 699**
**EP-A- 0 256 518**
**EP-A- 0 340 503**

(56) Entgegenhaltungen :
**DE-U- 8 801 758**
**FR-A- 2 205 234**
**FR-A- 2 446 940**
**GB-A- 2 022 775**
**US-A- 3 885 283**
**US-A- 4 691 421**

(73) Patentinhaber : **SULZER-ESCHER WYSS**
**GMBH**
**Escher Wyss-Strasse 25 Postfach 1380**
**W-7980 Ravensburg (DE)**

(72) Erfinder : **SCHNYDER, Eugen**
**Rigistrasse 1**
**CH-5622 Waltenschwil (CH)**
Erfinder : **LEU, Robert**
**Meilibachdörfli 8**
**CH-8804 Au/Wädenswil (CH)**

EP 0 401 323 B1

## Beschreibung

Technisches Gebiet

Die Erfindung bezieht sich auf eine Führungslagerung für einen Mantel einer Druckwalze, der rotierbar um einen unverdrehbar feststehenden Träger angeordnet, mittels wenigstens eines Druckeinstellelements am Träger abgestützt und zu dem Träger entlang einer Druckebene der Druckwalze verschiebbar ist, wobei die Führungslagerumg zum führen des Mantels entlang der besagten Druckebene zum Träger ausgebildet ist.

Stand der Technik

Aus EP-A-236 699 ist eine Druckeinstellwalze bekannt, bei der die Walzenmantel-Enden ringförmige Abschnitte tragen, die auf ihrer Außenseite von einer Lagerung umgeben und somit direkt auf dem Träger gelagert sind, d.h. keine Führungslagerung aufweisen. Aufgabe dieser Erfindung ist es außerdem, schmier- und beheizungsmäßige Probleme bei Temperaturen der Wärmeträgerflüssigkeit im Innern der Hohlwalze von etwa 260° bis 280°C zu lösen.

Bei der in US-A-3 885 283 beschriebenen Druckwalze ist andererseits der rotierbare Walzenmantel entlang der Druckebene über seine gesamte Länge relativ zum unverdrehbaren Träger über Druckeinstellelemente verschiebbar. Zwischen dem Außendurchmesser des Trägers und dem Innendurchmesser des Mantels ist ein Spiel vorgesehen, welches das Ausmaß der möglichen Verschiebung des Mantels zum Träger ergibt. Um nicht aus der Druckebene seitlich auszubrechen, ist der Mantel im wesentlichen in der Druckebene geführt, und zwar mittels einer Führungslagerung, die im Spielraum zwischen dem Mantel und dem Träger angeordnet ist, wobei der Innenring eines Wälzlagers mit einer Führung versehen ist, die das seitliche Ausbrechen des Mantels verhindert. Wegen der Anordnung der Führungslagerung innerhalb des Walzenmantels ist es konstruktionsmäßig schwierig und aufwendig, die dem Walzenmantel zugeordneten Hilfsvorrichtungen, wie z.B. Schaber, Umlenkrollen u.ä., synchron beim Ändern der Position des Mantels über die Druckeinstellelemente in gleichem Maße zu positionieren. Eine negative Rolle spielt auch die relativ schwere Zugänglichkeit zur Lagerung und den Teilen hinter der Lagerung. Bei beheizten Walzen dieser Art mit Umfangstemperaturen bis 250°C ist es zudem schwierig, die zulässige maximale Lagertemperatur und eine ausreichende Lagerschmierung aufrechtzuerhalten.

In der erst nach dem Prioritätstag publizierten WO 89/01542 ist eine Druckwalze vorgeschlagen, deren Walzenmantel-Enden einen an der Außenfläche gelagerten ringförmigen Abschnitt tragen, der mit einer Parallelogrammführung gegen den Träger geführt ist. Diese stellt eine Kreisbogenführung dar, jedoch keine exakte Geradführung in der Druckebene, wie sie häufig gefordert ist.

Darstellung der Erfindung

Der Erfindung liegt die Aufgabe zugrunde, eine Führungslagerung für die eingangs angegebene Druckwalze zu finden, die die oben angeführten Schwierigkeiten vermeidet und eine einwandfreie Lagerschmierung und Kühlung mit einer einfachen Konstruktion und exakter Führung in der Druckebene auch unter schwierigen Betriebsbedingungen gewährleistet.

Erfindungsgemäß wir die Aufgabe dadurch gelöst, daß die Führungslagerung einen Innenring aufweist, der auf der Außenfläche eines ringförmigen Abschnitts an der Seite des Mantels aufgesetzt ist, daß einem dem Innenring zur Lagerung zugeordneten Außenring eine Führungsvorrichtung zum Führen des Außenrings und damit des Mantels entlang der besagten Druckebene angeschlossen ist, daß die Führungsvorrichtung beidseits des Trägers jeweils ebene, parallel zur Druckebene orientierte Gleitflächen zur Führung des Außenrings relativ zum Träger in der Druckebene aufweist, daß die Außenfläche des ringförmigen Abschnitts einen kleineren Drucmesser als der größte Außendurchmesser des Mantels hat und daß die Innenfläche des Abschnitts einen größeren Durchmesser als der Durchmesser des Trägers im Bereich des Abschnitts zum Bilden eines Freiraumes zwischen dem Abschnitt und dem Träger hat.

Eine vorteilhafte Weiterbildung ist dadurch gekennzeichnet, daß der Außenring der Führungslagerung oder sein Gehäuse wenigstens eine Hilfsvorrichtung trägt, welche bei Bewegung des Mantels im Raum synchron mitbewegt wird.

Es ist eine gute Zugänglichkeit zu dem beim Betrieb rotierenden Innenring der Lagerung, sowie zu dem beim Betrieb stehenden Außenring derselben erreicht. Dabei ergibt sich auch die Möglichkeit, dem Außenring direkt oder ggf. seinem Gehäuse die oben erwähnten Hilfsvorrichtungen konstruktionsmäßig einfach anzuhängen, die sich dann synchron und in gleichem Maße mit der Positionierung des Walzenmantels bewegen. Die Lagerung läßt sich problemlos mit gewünschten Mitteln sowohl schmieren wie kühlen.

In den Unteransprüchen sind weitere vorteilhafte Ausführungsbeispiele der Erfindung gekennzeichnet.

Kurze Beschreibung der Zeichnungen

Im weiteren wird der Erfindungsgegenstand und die damit erreichbaren Vorteile anhand von Ausführungsbeispielen näher beschrieben und erklärt. Die Beschreibung bezeith sich auf eine Zeichnung, in welcher in schematischer Weise zeigen:
Fig. 1 eine Druckwalze mit Führungslagerung im Schnitt,
Fig. 2 die Führungslagerung in Ansicht,
Fig. 3 und 4 ein zweites Ausführungsbeispiel in Ansicht von vorn und von der Seite, und
Fig. 5 ein weiteres Ausführungsbeispiel im Schnitt.

Wede zur Ausführung der Erfindung

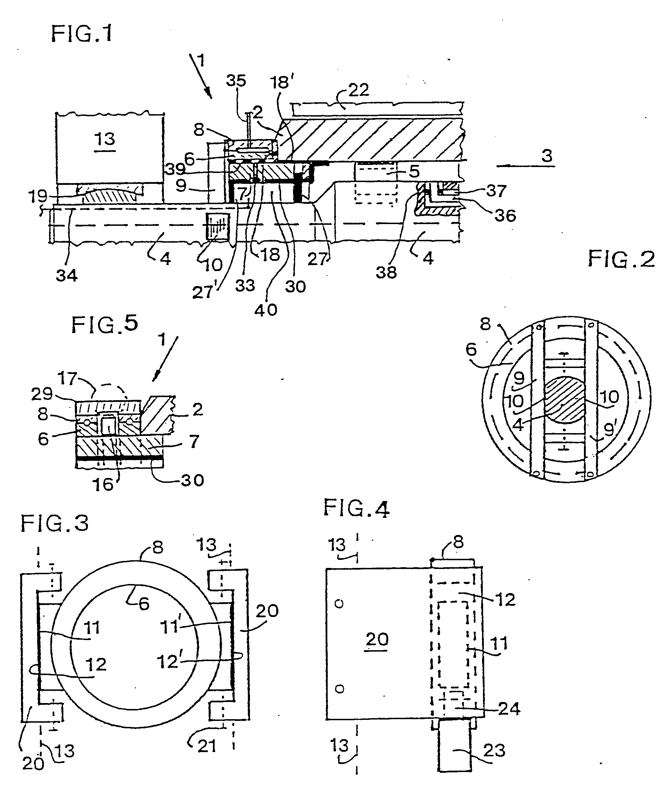

Bei dem in Fig. 1 und 2 dargestellten Beispiel ist eine Führungslagerung 1 zum Lagern und Führen eines Walzenmantels 2 einer Druckwalze 3 vorgesehen. Der Mantel 2 ist rotierbar um einen unverdrehbar feststehenden Träger 4 angeordnet. Der Mantel 2 ist an seiner Innenfläche mittels wenigstens eines Druckeinstellelementes 5 an dem Träger 4 abgestützt und im wesentlichen senkrecht zu ihm hin und her jeweils in der Druckebene der Walzen 3 und 22 verschiebbar, und zwar im Ausmaß des Spieles zwischen der Innenfläche des Mantels 2 und dem Träger 4, bzw. des Freiraumes 40 zwischen dem Abschnitt 7 und einem dort jeweils vorhandenen Außendurchmesser des Trägers 4. Die Druckeinstellelemente 5 sind zum Nachfahren, bzw. zum Ausführen dieser Bewegung ausgelegt. Die Führungslagerung 1 ist zwischen dem Mantel 2 und dem Träger 4 vorgesehen, und zum Vermeiden eines Ausbrechens des Mantels aus der Druckebene sind bei der Führungslagerung Mittel 9, 10 zum Führen des Mantels 2 zum Träger 4 in der Druckebene vorhanden. Der Träger 4 ist unverdrehbar, jedoch in der Druckebene biegbar in einem Support 13 mittels eines Pendellagers 19 gelagert. Der Support 13 ist in einer (nicht gezeichneten) Stuhlung eines Walzwerkes mit den Walzen 3 und 22 fest einmontiert.

Die Führungslagerung 1 weist einen Innenring 6 auf, der auf der Außenfläche eines ringförmigen Abschnitts 7 an der Seite des Mantels 2 aufgesetzt ist. Der Abschnitt 7 kann zusammen mit dem Mantel 2, z.B. gegossen, hergestellt werden. Wie hier ausgeführt, ist der Abschnitt 7 ein Ring, der an dem Mantel 2 befestigt ist und mit ihm, form- sowie kralschlüssig eine Einheit bildet, Einem dem Innenring 6 zum Bilden eines Wälzlagers zugeordneten Außenring 8 sind Teile 9, 9′ einer Führungsvorrichtung zum Führen des Außenrings 8 und damit des Mantels 2 in der Druckebene zugeordnet. Die Führungsvorrichtung und die Führungsweise werden später beschrieben.

Um nicht über die Preßlinie zwischen den Walzflächen der Walzen 3 und 22 mit der Anordnung der Ringe 6 und 8 auf der Außenfläche des Abschnitts 7 zu kommen, weist die Außenfläche des ringförmigen Abschnitts 7 einen entsprechend kleineren Durchmesser auf, als der größte Außendurchmesser des Mantels 2 ist. Um das vorgesehene Verschiebungsspiel zwischen dem Mantel 2, bzw. Abschnitt 7 und Träger 4 nicht zu beeinträchtigen, weist die Innenfläche des ringförmigen Abschnitts 7 einen entsprechend größeren Durchmesser auf als der Durchmesser des Trägers 4 im Bereich des Abschnitts 7 ist.

Zu dem Außenring 8 sind an seiner weg vom Mantel 2 weisenden Seite zwei parallel zueinander verlaufende Leisten 9 befestigt, die zwischeneinander eine Führungskulisse mit länglicher Führungsbahn bilden, die im wesentlichen parallel zur Achsebene des Außenrings 8 verläuft. Beiderseits am Träger 4 sind vertikal, d.h. parallel zu der Preßebene verlaufende ebene Führungsflächen 10 vorgesehen. Die Distanz zwischen den Leisten 9 und 9′ an dem Außenring 8 entspricht der Distanz der Führungsflächen 10 über den Träger 4 in der Weise einer gleitenden Passung zwischen der Führungsbahn der Führungskulisse und den Führungsflächen. Damit ist sichergestellt, daß der Außenring 8 beim Betrieb unverdrehbar ist und nur zum Führen des Mantels 2 im wesentlichen parallel zu der Preßebene verschiebbar ist. Die Führungsbahn ist mit Vorteil zur Begrenzung des Verschiebens begrenzt. Dazu sind quer zu den Leisten 9 und 9′ verlaufende Stäbe vorgesehen, die mit Stellschrauben ergänzt werden können. Mit Vorteil sind hier z.B. hydraulische Stellvorrichtungen anwendbar.

Nach dem Ausführungsbeispiel, das in den Fig. 3 und 4 gezeigt ist, sind an dem Außenring 8 beiderseits zueinander parallel verlaufende Führungsflächen 11 und 11′ angebracht. Zum Führen dieser Flächer 11 und 11′ und damit des Außenrings 8 und des Mantels 2 parallel zu der besagten Druckebene sind zum Anordnen beiderseits des Außenrings 8 zwei eine Führungskulisse bildende, parallel zueinander verlaufende ebene Flächen 12 und 12′ vorgesehen, die an Platten 20 ausgebildet sind, welche zu dem Support 13 der Walze 3, in dem ihr Träger 4 unverdrehbar gelagert ist, befestigt sind. Auch zwischen diesen die Führungskulisse bildenden Flächen 12, 12′ und den Führungsflächen 11, 11′ am Außenring 8 ist eine gleitende Fassung ausgebildet. Mit Vorteil sind die Flächen 11, 11′ und 12, 12′ mit einer das Gleiten erleichternden Kunststoffschicht versehen.

EP 0 401 323 B1

Mit Vorteil kann die Führung als eine Rollenführung ausgebildet sein. Es kommt auch eine hydrostatische Lagerung, oder eine geeignete Materialpaarung mit Vorteil in Anwendung. Vorteilhalerweise können die Platten 20 direkt an der (nicht gezeichneten) Stuhlung, in der der Support 13 befestigt ist, befestigt werden.

In der praktischen Ausführung ist ein nicht dargestelltes Lagergehäuse vorgesehen, in dem das Lager mit dem Innenring 6 und dem Außenring 8 untergebracht ist, und welches z.B. in der Fig. 5 angedeutet und mit 29 bezeichnet ist. In der konkreten Ausführung mit dem Gehäuse, bei der z.B. für angemessene SChmierung und-/oder Kühlung des gekapselten Lagers gesorgt ist, wobei der Außenring 8 mit dem Gehäuse kraft- sowie formschlüssig verbunden ist, sind die Führungsflächen 11 an der Außenkontur des Gehäuses ausgeführt. Für eine angemessene Schmierung und/oder Kühlung des Lagers mit dem Außenring 8 und dem Innenring 6 ist gesorgt, indem das Lager in einem zusätzlichen, getrennten Kreislauf mit einem Schmiermedium durch einen Einlaß 35 durchströmbar ist.

Um einen Wärmefluß vom Mantel 2 auf das Lager mit dem Innenring 6 und dem Außenring 8 zu begrenzen, ist es vorteilhaft, wenigstens zwischen das Lager und den Mantel 2, zu dem auch der eingesetzte ringförmige Abschnitt 7 gehört, wenigstens eine thermisch isolierende Schicht vorzusehen, wie sie in Fig. 1 mit dicken Linien angedeutet und mit 18 bzw. 18′ bezeichnet ist. Auf vorteilhafte Weise wäre es auch möglich, zwischen dem Lager und dem Mantel, insbesondere im Bereich des ringförmigen Abschnitts 7, Isolationsräume vorzusehen und diese eventuell einem Kühlsystem anzuschließen, wie z.B. in Form eines Labyrinths 39 gezeigt, welches einem Kühlsystem angeschlossen ist, das mit einem wärmetragenden Medium durchströmbar ist. Solches Kühlsystem ist auch der Freiraum 40 zwischen dem Abschnitt 7 und dem Träger 4, welcher mit einem wärmetragenden Medium durchströmbar ist, wozu das Medium durch den Träger 4 durch eine Leitung 34 zu führen ist. Aus dem Freiraum 40 führt in das Labyrinth 39 durch den Abschnitt 7 ein, bzw. mehrere Kanäle 33. Zur Verminderung des Wärmeflusses vom Raum 40 in den Abschnitt 7 kann auch eine thermisch isolierende, bis in den Bereich des Mantels 2 reichende Schicht 30 vorgesehen sein. Mit Vorteil ist sie aus einem schlechtleitenden rostfreien Stahl ausgeführt. Ein Heizmittelfluß, bzw. ein Druckmittelfluß aus dem Zwischenraum zwischen dem Mantel 2 und dem Träger 4, der mit den Druckeinstellelementen 5 besetzt ist, ist weiterhin mit einem Dichtungssystem 27 und 27′ an den Grenzen des Zwischenraums begrenzt.

Um thermisch bedingte Deformationen hauptsächlich im Bereich des Trägers zu vermeiden, sind die das Heizmedium für den Mantel 2 führenden Mittel Rohre 36, für welche in dem Träger 4 Kanäle 37 vorgesehen sind, die einen größeren Durchmesser aufweisen als Rohre 36 Außendurchmesser haben. Die Rohre 36 werden in den Kanälen 37 durch Befestigungen 38 im Abstand zu den Kanalwänden gehalten. Dadurch ist jeweils ein Isolationsraum zwischen den das Heizmedium führenden Rohren 36 und dem Korpus des Trägers 4 vorhanden.

Wie in Fig. 3 gezeigt, ist es sinnvoll, die vertikale Verschiebung des Mantels 2 zu begrenzen, wozu die dort angedeuteten, mit 21 bezeichneten Stellschrauben dienen können. Zur Mechanisierung und/oder Regelung einer Abstützung des Außenrings 8 zum Support 13, in dem der Träger 4 gelagert ist, ist mit Vorteil ein z.B: hydraulischer Stellmotor 23 (Fig. 4) mit einer Kolbenstange 24 an der Platte 20, in der die Flächen 12 ausgebildet sind, abgestützt, welcher mit seiner verschiebbaren Kolbenstange 24 den Außenring direkt, oder ggfs. über sein Gehäuse stützt. Mit diesem Stellmotor 23 ist es ermöglicht, die bekannten sog. Überhanglasten über den Außenring 8 beim sog. Nip-Relieving abzustützen und aufzunehmen. Des weiteren benutzt man diesen, oder einen solchen Stellmotor 23 beim Schnellöffnen des Preßspaltes zwischen den Walzen 3 und 22. Der Vorteil dieser Anordnung liegt neben anderem darin, daß z.B. beim Walzenwechsel die hydraulischen Anschlüsse des Stellmotors 23 nicht gelöst werden müssen. Wie oben erwähnt, können vorteilhafterweise die Platten 20 und auch dieser Stellmotor 23 direkt an der (nicht gezeichneten) Stuhlung, in der der Support 13 befestigt ist, abgestützt sein. Der Stellmotor 23 kann mit Vorteil mittig in der Druckebene relativ zum Außenring 8 angeordnet sein.

In dem Ausführungsbeispiel gemäß Fig. 5 ist neben dem Lager mit dem Innenring 6 und dem Außenring 8 auf dem Abschnitt 7 ein Zahnring 16 zum Antrieb des Mantels 2 fest kraftschlüssig aufgesetzt. Der Außenring 8 ist von einem Gehäuse 29 umschlossen. An dem Gehäuse 29 ist ein Antriebsmotor 17 (gestrichelt) angeordnet, dessen Ritzel in den Zahnring 16 zum Antrieb eingreift. Wie hier dargestellt, handelt es sich um ein Schneckengetriebe. Es versteht sich, daß der Antriebsmotor 17 seitlich zu der Druckebene an dem Gehäuse 29 so angeordnet ist, daß sein Umriß nicht der Preßlinie zwischen den Walzen 3 und 22 in die Quere kommt, bzw. über sie hinausragt. Es kann auch ein Stirnradgetriebe angewendet werden.

## Patentansprüche

1. Führungslagerung (1) für einen Mantel (2) einer Druckwalze (3), der rotierbar um einen unverdrehbar feststehenden Träger (4) angeordnet, mittels wenigstens eines Druckeinstellelements (5) am Träger (4) abge-

4

stützt und zu dem Träger (4) entlang einer Druckebene der Druckwalze (3) verschiebbar ist, wobei die Führungslagerung (1) zum Führen des Mantels (2) entlang der besagten Druckebene zum Träger (4) ausgebildet ist,

**dadurch gekennzeichnet,**

daß die Führungslagerung (1) einen Innenring (6) aufweist, der auf der Außenfläche eines ringförmigen Abschnitts (7) an der Seite des Mantels (2) aufgesetzt ist, daß einem dem Innenring (6) zur Lagerung zugeordneten Außenring (8) eine Führungsvorrichtung (9, 9') zum Führen des Außenrings (8) und damit des Mantels (2) entlang der besagten Druckebene angeschlossen ist, daß die Führungsvorrichtung (9) beidseits des Trägers (4) jeweils ebene, parallel zur Druckebene orientierte Gleitflächen (10, 11, 11', 12, 12') zur Führung des Außenringes (8) relativ zum Träger (4) in der Druckebene aufweist, daß die Außenfläche des ringförmigen Abschnitts (7) einen kleineren Durchmesser als der größte Außendurchmesser des Mantels (2) hat, und daß die Innenfläche des Abschnitts (7) einen größeren Durchmesser als der Durchmesser des Trägers (4) im Bereich des Abschnitts (7) zum Bilden eines Freiraumes (40) zwischen dem Abschnitt (7) und dem Träger (4) hat.

2. Führungslagerung nach Anspruch 1,

**dadurch gekennzeichnet,**

daß der Außenring (8) der Führungsvorrichtung (9, 9') oder sein Gehäuse (29) wenigstens eine Hilfsvorrichtung (16, 17) trägt, welche bei Bewegung des Mantels (8) im Raum synchron mitbewegt wird.

3. Führungslagerung nach Anspruch 1 oder 2,

**dadurch gekennzeichnet,**

daß zu dem Außenring (8) an der vom Mantel (2) weg weisenden Seite zwei parallel zueinander verlaufende, zwischeneinander eine Führungskulisse bildende Leisten (9, 9') befestigt sind, die gleitend passend zu beiderseits am Träger (4) parallel zu der besagten Druckebene vorgesehenen Führungsflächen (10) angeordnet sind, so daß sich der Mantel (2) in Richtung zu einer Preßstelle hin und zurück bewegen kann.

4. Führungslagerung nach Anspruch 1 oder 2,

**dadurch gekennzeichnet,**

daß beiderseits an dem Außenring (8) zueinander parallel verlaufende Führungsflächen (11, 11') vorgesehen sind, daß weiter zwei zueinander parallel verlaufende, eine Führungskulisse für die Führungsflächen (11, 11') bildende Flächen (12, 12') vorgesehen sind, die gleitend passend zu den Führungsflächen (11, 11') an dem Außenring (8) ausgebildet sind und zu einem Support (13), in dem der Träger (4) unverdrehbar gelagert ist, befestigt sind.

5. Führungslagerung nach Anspruch 1,

**dadurch gekennzeichnet,**

daß neben dem Innenring (6) an dem Abschnitt (7) ein Zahnring (16) zu einem Mantelantrieb (17) kraftschlüssig aufgesetzt ist.

6. Führungslagerung nach einem der Ansprüche 1 - 5,

**dadurch gekennzeichnet,**

daß wenigstens zwischen dem Mantel (2) und dem Innenring (6) eine thermisch isolierende Schicht (18) vorgesehen ist.

7. Führungslagerung nach einem der Ansprüche 1 - 6,

**dadurch gekennzeichnet,**

daß an der Innenfläche des Abschnittes (7) eine bis in den Bereich des Mantels (2) reichende, thermisch isolierende Schicht (30) vorgesehen ist.

8. Führungslagerung nach einem der Ansprüche 1 - 7,

**dadurch gekennzeichnet,**

daß der Freiraum (40) zwischen dem Abschnitt (7) und dem Träger (4) mit einem wärmetragenden Medium (34) durchströmbar ist.

9. Führungslagerung nach Anspruch 8,

**dadurch gekennzeichnet,**

daß der Freiraum (40) gegen den Raum zwischen dem Mantel (2) und dem Träger (4) in axialer Richtung mit wenigstens einer Dichtung (27, 27') abgedichtet ist.

10. Führungslagerung nach einem der Ansprüche 1 - 9,

**dadurch gekennzeichnet,**

daß das Lager mit dem Innenring (6) und dem Außenring (8) mit einem Schmiermittel (35) durchströmbar ist.

11. Führungslagerung nach Anspruch 6 und 8,

**dadurch gekennzeichnet,**

daß die wärmeisolierende Schicht (18) als ein Kühlungslabyrinth (39) ausgeführt ist, welches über einen Kanal (33) aus dem Freiraum (40) mit einem wärmetragenden Medium durchströmbar ist.

12. Walze mit Führungslagerung nach Anspruch 1,

**dadurch gekennzeichnet,**

daß zum Führen eines Heizmediums zum Beheizen des Mantels (2) wenigstens ein Rohr (36) vorgesehen ist, das durch einen im Träger (4) ausgebildeten Kanal (37) führt, wobei der Kanal (37) jeweils einen größeren Durchmesser hat als der Außendurchmesser des Rohres (36) und wobei das Rohr (36) mit Befestigungen (38) im Abstand zu der Kanalwand gehalten wird.

**Claims**

1. A guide mounting (1) for a shell (2) of a pressure roller (3) which is arranged to rotate about a non-rotatable fixed carrier (4), is supported on the carrier (4) by means of at least one pressure-adjustment element (5) and is displaceable relative to the carrier (4) along a pressure plane of the pressure roller (3), the guide mounting (1) being designed to guide the shell (2) along said pressure plane relative to the carrier (4), characterised in that the guide mounting (1) has an inner ring (6) which is placed on the side of the shell (2) on the outer surface of an annular section (7), that a guide device (9, 9') for guiding an outer ring (8) and hence the shell (2) along said pressure plane is connected [to] the outer ring (8) associated with the inner ring (6) for bearing, that the guide device (9) has on either side of the carrier (4) flat sliding surfaces (10, 11, 11', 12, 12') oriented parallel to the pressure plane for guiding the outer ring (8) relative to the carrier (4) in the pressure plane, that the outer surface of the annular section (7) has a smaller diameter than the maximum diameter of the shell (2), and that the inner surface of the section (7) has a larger diameter than the diameter of the carrier (4) in the region of the section (7) to form a clearance (40) between the section (7) and the carrier (4).

2. A guide mounting according to Claim 1, characterised in that the outer ring (8) of the guide device (9, 9') or the housing (29) thereof bears at least one auxiliary device (16, 17) which is synchronously entrained in space upon movevent of the shell (8).

3. A guide mounting according to Claim 1 or 2, characterised in that two bars (9, 9') which run parallel to one another and form a guide link between one another are attached to the outer ring (8) on the side facing away from the shell (2), which bars are matched in a sliding fit to guide surfaces (10) provided on either side of the carrier (4) parallel to said pressure plane so that the shell (2) can move towards a pressure point and back again.

4. A guide mounting according to Claim 1 or 2, characterised in that guide surfaces (11, 11') which run parallel to one another are provided on both sides of the outer ring (8), that furthermore two surfaces (12, 12') which run parallel to one another and form a guide link for the guide surfaces (11, 11') are provided, which surfaces (12, 12') are designed matched in a sliding fit to the guide surfaces (11, 11') on the outer ring (8) and are attached to a support (13) in which the carrier (4) is non-rotationally mounted.

5. A guide mounting according to Claim 1, characterised in that a toothed ring (16) to a shell drive (17) is placed non-positively on the section (7), adjacent to the inner ring (6).

6. A guide mounting according to one of Claims 1 to 5, characterised in that a heat-insulating layer (18) is provided at least between the shell (2) and the inner ring (6).

7. A guide mounting according to one of Claims 1 to 6, characterised in that a heat-insulating layer (30) which extends into the region of the shell (2) is provided on the inner surface of the section (7).

8. A guide mounting according to one of Claims 1 to 7, characterised in that a heat-transfer medium (34) can flow through the clearance (40) between the section (7) and the carrier (4).

9. A guide mounting according to Claim 8, characterised in that the clearance (40) is sealed off from the space between the shell (2) and the carrier (4) in the axial direction by means of at least one seal (27, 27').

10. A guide mounting according to one of Claims 1 to 9,

characterised in that
a lubricant (35) can flow through the bearing with the inner ring (6) and the outer ring (8).

11. A guide mounting according to Claims 6 and 8,
characterised in that
the heat-insulating layer (18) is designed as a cooling labyrinth (39) through which a heat-transfer medium can flow via a channel (33) out of the clearance (40).

12. A roller with guide mounting according to Claim 1,
characterised in that
at least one pipe (36) is provided for guiding a heating medium for heating the shell (2), which pipe passes through a channel (37) made in the carrier (4), the channel (37) in each case having a larger diameter than the external diameter of the pipe (36) and the pipe (36) being held at a distance from the channel wall by attachment means (38).

## Revendications

1. Palier-guide (1) pour une chemise (2) d'un cylindre de pression (3), disposée en pouvant tourner autour d'un support fixe (4) non rotatif, en étant appuyée sur le support (4) au moyen d'au moins un élément (5) de réglage de la pression et en pouvant coulisser par rapport au support (4) le long d'un plan de pression du cylindre de pression (3), le palier-guide (1) pour le guidage de la chemise (2) étant ménagé le long dudit plan de pression par rapport au support (4),
caractérisé en ce que
le palier-guide (1) présente une bague intérieure (6) qui est posée sur la surface extérieure d'une section annulaire (7) sur le côté de la chemise (2), en ce qu'à une bague extérieure (8) associée à la bague intérieure (6) pour former un palier est raccordé un dispositif de guidage (9, 9') pour guider la bague extérieure (8) et par suite la chemise (2) le long dudit plan de pression, en ce que le dispositif de guidage (9) présente sur les deux côtés du support (4), des surfaces de glissement (10, 11, 11', 12, 12') planes, orientées parallèlement au plan de pression, pour le guidage de la bague extérieure (8) par rapport au support (4) dans le plan de pression, en ce que la surface extérieure de la section annulaire (7) a un diamètre plus petit que le plus grand diamètre extérieur de la chemise (2), et en ce que la surface intérieure de la section (7) a un diamètre plus grand que le diamètre du support (4) dans la zone de la section (7) pour former un espace libre (40) entre la section (7) et le support (4).

2. Palier-guide selon la revendication 1,
caractérisé en ce que
la bague extérieure (8) du dispositif de guidage (9, 9') ou bien son boîtier (29) porte au moins un dispositif auxiliaire (16, 17) qui est entraîné, lors du mouvement de la chemise (2), en synchronisme avec celle-ci dans l'espace.

3. Palier-guide selon la revendication 1 ou 2,
caractérisé en ce que,
sur la bague extérieure (8), sur le côté opposé à la chemise (2), sont fixées deux barres (9, 9') parallèles entre elles, formant entre elles une coulisse de guidage, qui sont disposées à ajustement glissant contre les surfaces de guidage (10) prévues de part et d'autre du support (4), parallèlement audit plan de pression, de telle sorte que la chemise (2) puisse se mouvoir en direction d'un endroit de pression, en allant et revenant.

4. Palier-guide selon la revendication 1 ou 2,
caractérisé en ce que
la bague extérieure (8) sont prévues de part d'autre deux surfaces de guidage (11, 11') parallèles entre elles, en ce que sont en outre prévues deux surfaces (12, 12') parallèles entre elles, formant une coulisse de guidage pour les surfaces de guidage (11, 11'), s'ajustant à glissement contre les surfaces de guidage (11, 11') sur la bague extérieure (8) et fixées à un support (13) dans lequel le support (4) est monté non-rotatif.

5. Palier-guide selon la revendication 1,
caractérisé en ce que,
près de la bague intérieure (6) sur la section (7), une couronne dentée (16) est disposée en étant en liaison cinématique avec un dispositif d'entraînement (17) de la chemise.

6. Palier-guide selon une des revendications 1 à 5,
caractérisé en ce qu'une
couche d'isolation thermique (18) est prévue, au moins entre la chemise (2) et la bague intérieure (6).

7. Palier-guide selon une des revendications 1 à 6,
caractérisé en ce qu'une

couche d'isolation thermique (30) s'étendant jusque dans la zone de la chemise (2) est prévue sur la surface intérieure de la section (7).

8. Palier-guide selon une des revendications 1 à 7,
caractérisé en ce que
l'espace libre (40 entre la section (7) et le support (4) peut être parcouru par un fluide vecteur de chaleur (34).

9. Palier-guide selon la revendication 8,
caractérisé en ce que
l'espace libre (40) est rendu étanche dans le sens axial au moyen d'au moins un joint étanche (27, 27') par rapport à l'espace entre la chemise (2) et le support (4).

10. Palier-guide selon une des revendications 1 à 9,
caractérisé en ce que
le palier, avec la bague intérieure (6) et la bague extérieure (8) peut être parcouru par un lubrifiant (35).

11. Palier-guide selon les revendications 6 et 8,
caractérisé en ce que
la couche d'isolation thermique (18) est réalisée sous la forme d'un labyrinthe de refroidissement (39), qui peut être parcouru par un fluide vecteur de chaleur venant de l'espace libre (40) par un canal (33).

12. Cylindre avec un palier-guide selon la revendication 1,
caractérisé en ce qu'il
est prévu, pour conduire un fluide de chauffage pour chauffer la chemise (2), au moins un tuyau (36) passant par un canal (37) ménagé dans le support (4), le canal (37) ayant toujours un diamètre plus grand que le diamètre extérieur du tuyau (36) et le tuyau (36) étant tenu à distance de la paroi du canal par des fixations (38).

FIG.1

FIG.2

FIG.5

FIG.3

FIG.4